# EUROPÄISCHE PATENTSCHRIFT

(11) **EP 2 703 266 B1**
(45) Veröffentlichungstag und Bekanntmachung des Hinweises auf die Patenterteilung: **17.12.2014**
(21) Anmeldenummer: 13173797.5
(22) Anmeldetag: 26.06.2013
(51) Int. Cl.: B62J 15/00, B62J 6/18

(54) **Kabelabdeckungsvorrichtung**
Cable cover device
Dispositif de recouvrement de câble

(30) Priorität: 28.08.2012 DE 202012103260 U
(43) Veröffentlichungstag der Anmeldung: 05.03.2014
(73) Patentinhaber: sks metaplast Scheffer-Klute GmbH, 59846 Sundern (DE)
(72) Erfinder: Grabski, Karsten, 59469 Ense (DE)
(74) Vertreter: Basfeld, Rainer

(56) Entgegenhaltungen:
- EP-A1- 1 785 342
- EP-A1- 2 060 478
- FR-A- 1 506 469
- GB-A- 2 307 670

## Beschreibung

Die vorliegende Erfindung betrifft eine Kabelabdeckungsvorrichtung für einen Radschützer eines Fahrrads gemäß dem Oberbegriff des Anspruchs 1.

Kabelabdeckungsvorrichtungen werden dazu verwendet, Kabel abzudecken, die von einem Bauteil eines Fahrrads zu einem anderen geführt werden sollen. So werden die Kabel vor Krafteinflüssen und Verformungen geschützt. Es ist auch möglich, Kabel an der dem Rad zugewandten Seite eines Radschützers entlang zu führen. Dies hat allerdings den Nachteil, dass das Kabel mit dem Rad in Kontakt kommen kann und durch das Rad beschädigt werden kann oder den Lauf des Rads behindern kann.

Solche Kabelabdeckungsvorrichtungen sind aus dem Stand der Technik bekannt. Die DE 20 2007 007 576 U1 zeigt einen Radschützer zum Verbergen von Leitungskabeln mit einer Abdeckplatte. Der Radschützer weist hierfür eine Kehle auf, durch die das Kabel geführt wird. Die Abdeckplatte wird dann mit Befestigungsmitteln an dem Radschützer befestigt und deckt die Kehle ab. Zwischen der Abdeckplatte und der Kehle wird so ein Leerraum geschaffen, durch den das Kabel verläuft.

Diese Kabelabdeckungsvorrichtungen haben insbesondere den Nachteil, dass am Radschützer eine Kehle vorhanden sein muss, um das Kabel abzudecken. Es gibt allerdings eine Vielzahl von Radschützern ohne eine solche Kehle, weshalb die Abdeckungsvorrichtung aus der DE 202007 007 576 U1 für diese Radschützer nicht verwendet werden kann.

Die EP 1 785 342 A1 zeigt eine Kabelführungsstruktur für Fahrrader, deren spezielle Charakteristik es ist, dass sie Kabelführungsmittel aufweist, die mittels einer Klemmvorrichtung an einem Radschützer festgeklemmt werden können.

Demgegenüber liegt der Erfindung die Aufgabe zugrunde, eine verbesserte Kabelabdeckungsvorrichtung, ein verbessertes Kabelabdeckungssystem und ein verbessertes Fahrrad, insbesondere eine Kabelabdeckungsvorrichtung für Radschützer ohne Kehle für ein Kabel, ein Kabelabdeckungssystem mit einem solchen Radschützer und ein Fahrrad mit einem solchen Radschützer zu schaffen.

Gemäß Anspruch 1 ist vorgesehen, dass die Befestigungsmittel dazu ausgebildet sind, beide Ränder des Radschützers gleichzeitig zu umgreifen. Dadurch wird erreicht, dass die Befestigungsmittel an jedem handelsüblichen Radschützer angebracht werden können. Handelsübliche Radschützer verfügen schließlich über zwei Ränder. Für das Anbringen der Befestigungsmittel, die zur Befestigung der Abdeckungsmittel an dem Radschützer dienen, wird also keine besondere Ausgestaltung des Radschützers benötigt.

Dadurch, dass die Befestigungsmittel dazu ausgebildet sind, beide Ränder des Radschützers gleichzeitig zu umgreifen, können sie eine Kraft auf ein zwischen dem Radschützer und den Abdeckungsmitteln geführtes Kabel ausüben. Das Kabel wird somit zwischen den Abdeckungsmitteln und dem Radschützer eingeklemmt. So wird es abgedeckt. Zusätzlich dazu wird verhindert, dass Kräfte auf das Kabel wirken.

Nach einer Ausführungsform der Erfindung sind die Befestigungsmittel biegbar ausgebildet. Außerdem sind sie dazu ausgebildet, die Abdeckungsmittel durch eine Klemmverbindung an dem Radschützer zu befestigen. Durch die biegbare Ausgestaltung der Befestigungsmittel lassen sie sich für einen Benutzer in einfacher Weise an dem Radschützer befestigen. Die Biegbarkeit der Befestigungsmittel wird bevorzugt dadurch erreicht, dass die Befestigungsmittel aus einem elastisch verformbaren Material gefertigt sind. Bei der Anbringung der Befestigungsmittel werden diese dann elastisch verformt und verbleiben dadurch in dem verformten Zustand, dass die elastische Rückstellkraft der Befestigungsmittel nicht ausreicht, um den Radschützer zu verformen. Somit werden die Befestigungsmittel durch die elastische Rückstellkraft an dem Radschützer gehalten.

Zwischen den Befestigungsmitteln und dem Radschützer sind die Abdeckungsmittel angeordnet. Beispielsweise können die Abdeckungsmittel mit den Befestigungsmitteln lösbar oder unlösbar verbunden sein. Die Verbindung zwischen den Abdeckungsmitteln und den Befestigungsmitteln kann beispielsweise als eine stoffschlüssige oder kraftschlüssige Verbindung ausgebildet sein. Beispielsweise können die Befestigungsmittel an den Abdeckungsmitteln angeklebt oder angeschraubt sein. Es ist allerdings auch möglich, dass die Abdeckungsmittel und die Befestigungsmittel einstückig ausgebildet sind. Somit werden die Abdeckungsmittel also durch die Klemmverbindung der Befestigungsmittel an dem Radschützer befestigt.

Nach einer Ausführungsform der Erfindung sind die Abdeckungsmittel dazu ausgebildet, einen zumindest teilweise in zwei Richtungen gekrümmten Teilbereich des Radschützers abzudecken. Handelsübliche Radschützer sind zumindest teilweise in zwei Richtungen gebogen. Zum einen sind sie der Kreisform des Rades angepasst. Zum anderen können sie durch die Biegung in der zweiten Richtung mehr vom Rad aufgewirbelten Schmutz abfangen als ein flach ausgebildeter Radschützer.

Somit lässt sich mit den Abdeckungsmitteln ein handelsübliches Schutzblech zumindest teilweise abdecken. Daher kann ein an diesem handelsüblichen Schutzblech entlang geführtes Kabel durch die Abdeckungsmittel abgedeckt werden.

Nach einer Ausführungsform der Erfindung weisen die Befestigungsmittel teilkreisförmige Abschnitte mit jeweils einer Öffnung auf. Die Größe der Öffnungen verändert sich bei einer Biegung der Befestigungsmittel. Dies führt dazu, dass sich die Befestigungsmittel an unterschiedlich breit ausgestalteten Radschützern und/oder an Radschützern mit unterschiedlichen Krümmungsradien befestigen lassen. Mit anderen Worten dienen die teilkreisförmigen Abschnitte zum Toleranzausgleich der Befestigungsmittel für unterschiedlich ausgestaltete Radschützer. Durch die teilkreisförmigen Öffnungen vergrößert sich also die Anzahl der Einsatzmöglichkeiten der Kabelabdeckungsvorrichtung.

Nach einer Ausführungsform der Erfindung sind die Befestigungsmittel als Kunststoffspritzgussteile ausgebildet. Die Herstellung als Kunststoffspritzgussteil ist besonders kostengünstig. Außerdem kann beispielsweise ein Kunststoff gewählt werden, der aufgrund seiner Elastizität besonders für solche Befestigungsmittel geeignet ist.

Nach einer Ausführungsform der Erfindung sind die Befestigungsmittel dazu ausgebildet, die Abdeckungsmittel in einer Richtung komplett zu umschließen. Dadurch wird eine besonders feste Verbindung zwischen den Befestigungsmitteln und den Abdeckungsmitteln erreicht.

Nach einer Ausführungsform der Erfindung umfassen die Befestigungsmittel einen mittleren Bereich, zwei sich an beiden Seiten des mittleren Bereichs anschließende Zwischenbereiche und zwei Endbereiche. Die teilkreisförmigen Abschnitte sind dabei jeweils zwischen einem der Endbereiche und einem der Zwischenbereiche angeordnet. Mit anderen Worten umfassen die Befestigungsmittel zwei teilkreisförmige Abschnitte, wobei jeder der teilkreisförmigen Abschnitte zwischen einem Endbereich und einem Zwischenbereich angeordnet ist. Durch diese Anordnung der teilkreisförmigen Abschnitte wird ein besonders guter Toleranzausgleich der Befestigungsmittel für unterschiedliche Radschützer erreicht.

Nach einer Ausführungsform der Erfindung sind die Abdeckungsmittel zum Abdecken eines Kabels ausgebildet, das von einer elektrischen Energiequelle des Fahrrads zu einem elektrischen Antrieb des Fahrrads führt. Die elektrische Energiequelle kann dabei beispielsweise ein elektrischer Akkumulator sein. Der elektrische Antrieb kann beispielsweise ein Elektromotor sein. Sogenannte E-Bikes verfügen über einen Akkumulator, der häufig am oder in der Nähe des Gepäckträgers, also über dem Hinterrad, angeordnet ist. Der Elektromotor ist häufig am Tretlager, also zwischen Vorder- und Hinterrad angeordnet. Der Akkumulator und der Elektromotor sind über ein Kabel miteinander verbunden. Das Kabel kann nun durch die Kabelabdeckungsvorrichtung abgedeckt werden. Außerdem üben die Befestigungsmittel indirekt auf das Kabel eine Kraft aus, die das Kabel gegen den Radschützer drückt. Das Kabel wird also zwischen den Abdeckungsmitteln und dem Radschützer eingeklemmt. Die Kraft wird von den Befestigungsmitteln an die Abdeckungsmittel übertragen, die durch die Kraft gegen das Kabel gedrückt werden und das Kabel einklemmen.

Die Kabel von der elektrischen Energiequelle zum elektrischen Antrieb sind üblicherweise dicker als Kabel beispielsweise für eine Leuchte des Fahrrads, da größere Energiemengen von der Energiequelle zum Antrieb transportiert werden müssen. Die Kabelabdeckungsvorrichtung eignet sich besonders gut für eine Abdeckung solcher Kabel, da diese Kabel aufgrund ihrer Dicke besonders einfach zwischen den Abdeckungsmitteln und dem Radschützer eingeklemmt werden können.

In einem weiteren Aspekt betrifft die Erfindung einen Radschützer umfassend ein Kabel und eine an dem Radschützer befestigte Kabelabdeckungsvorrichtung nach einer Ausführungsform der Erfindung. Ein solcher Radschützer ist insbesondere vorteilhaft, da das Kabel in einfacher Weise wie oben beschrieben eingeklemmt werden kann.

Nach einer Ausführungsform der Erfindung ist das Kabel zwischen dem Radschützer und den Abdeckungsmitteln eingeklemmt.

In noch einem weiteren Aspekt betrifft die Erfindung ein Fahrrad mit einem Radschützer nach einer Ausführungsform der Erfindung.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden gleiche Bezugszeichen für gleiche oder ähnliche Bauteile verwendet. Darin zeigen
- Fig. 1: eine schematische Teilansicht eines Fahrrads;
- Fig. 2: eine schematische Ansicht eines aus Figur 1 vergrößerten Abschnitts;
- Fig. 3: eine schematische Schnittansicht eines ähnlichen Ausschnitts wie Fig. 2;
- Fig. 4: eine schematische Ansicht eines Radschützers mit einem durch eine Kabelabdeckungsvorrichtung abgedeckten Kabel;
- Fig. 5: eine schematische Ansicht eines Radschützers mit einem daran entlang geführten Kabel und einer vom Radschützer gelösten Kabelabdeckungsvorrichtung; und
- Fig. 6: eine schematische Schnittansicht eines Radschützers mit einem durch eine Kabelabdeckungsvorrichtung abgedeckten Kabel.

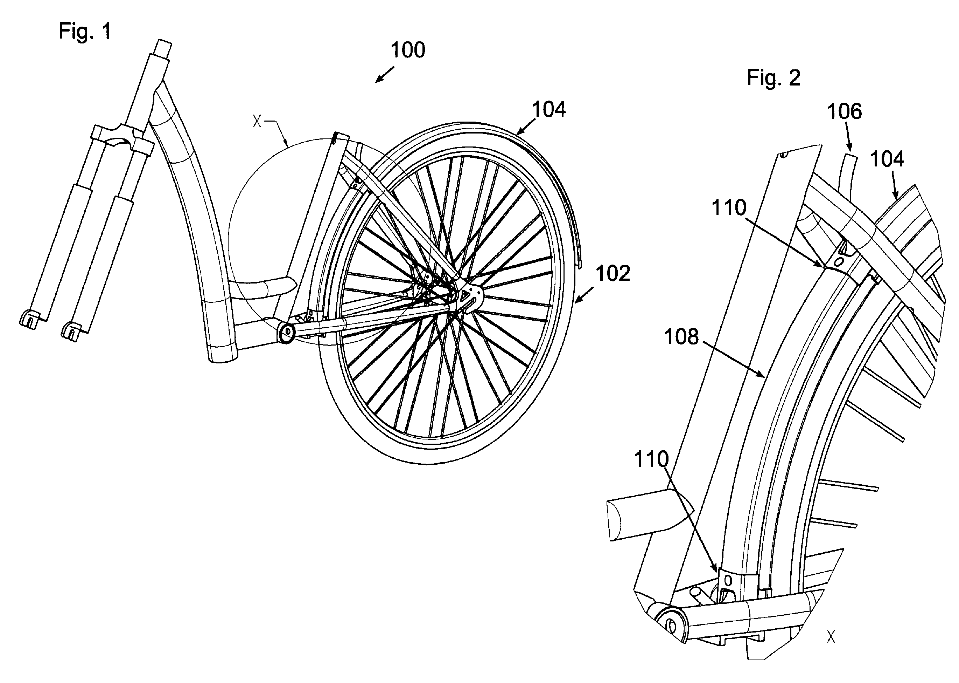

Figur 1 zeigt eine schematische Teilansicht eines Fahrrads 100 mit einem Hinterrad 102, das zum Teil von einem Radschützer 104 umgeben ist. Der Radschützer 104 dient dazu, Schmutz, der vom Hinterrad 102 aufgewirbelt und hochgeschleudert wird, abzufangen. Daher ist der Radschützer 104 in zwei Richtungen gekrümmt. Zum einen ist er der kreisförmigen Krümmung des Hinterrads 102 angepasst. Zum anderen umschließt er einen Außenbereich des Reifens durch die Krümmung in der zweiten Richtung. Dies ist besonders vorteilhaft, um Schmutz abzufangen, der leicht schräg in eine seitliche Richtung vom Hinterrad 102 aufgewirbelt wird.

Außerdem ist in Figur 1 ein Bildausschnitt X gekennzeichnet. Dieser Bildausschnitt ist in Figur 2 vergrößert dargestellt. In Figur 2 sind Abdeckungsmittel 108 dargestellt, die mittels Befestigungsmittel 110 an dem Radschützer 104 befestigt sind. Die Befestigungsmittel 110 können beispielsweise stoffschlüssig oder kraftschlüssig lösbar oder unlösbar mit den Abdeckungsmitteln 108 verbunden sein. Die Abdeckungsmittel 108 decken ein Kabel 106 ab. Das Kabel 106 führt vom Tretlager des Fahrrads 100, wo beispielsweise ein elektrischer Antrieb angeordnet sein kann, in einen Bereich am oder in der Nähe des nicht dargestellten Gepäckträgers, wo beispielsweise eine elektrische Energiequelle angeordnet sein kann.

Die Befestigungsmittel 110 umgreifen Ränder des Radschützers 104 und sind mit einer Klemmverbindung am Radschützer 104 befestigt. Die Befestigungsmittel 110 sind elastisch ausgebildet. Bei der Befestigung der Befestigungsmittel 110 am Radschützer 104 werden die Befestigungsmittel 110 elastisch verformt, wodurch sie eine elastische Rückstellkraft auf die Abdeckungsmittel 108 ausüben. Die Abdeckungsmittel 108 klemmen aufgrund dieser elastischen Rückstellkraft das Kabel 106 zwischen sich und dem Radschützer 104 ein.

Die Abdeckungsmittel 108 können aus dem gleichen Material und in der gleichen Farbe wie der Radschützer 104 ausgebildet sein. Somit werden die Kabelabdeckungsmittel für einen Benutzer nicht direkt als solche ersichtlich. Es ist allerdings auch möglich, dass die Abdeckungsmittel 108 aus einem anderen Material und in einer anderen Farbe als der Radschützer 104 ausgebildet sind.

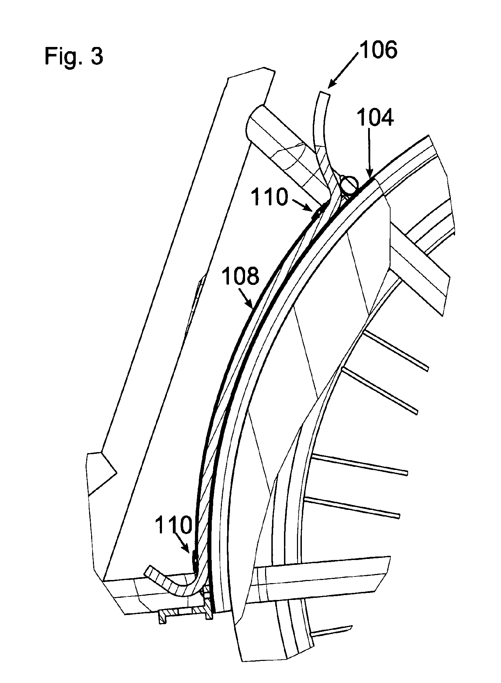

Figur 3 zeigt eine schematische Schnittansicht eines ähnlichen Ausschnitts wie er in Figur 2 zu sehen ist. In der Schnittansicht von Figur 3 ist deutlich zu erkennen, dass das Kabel 106 zu einem Teil an einem Abschnitt des Radschützers 104 entlang läuft. Das Kabel 106 wird durch die Abdeckungsmittel 108 abgedeckt. Die die Abdeckungsmittel 108 und die Befestigungsmittel 110 umfassende Kabelabdeckungsvorrichtung wird mittels der Befestigungsmittel 110 an dem Radschützer 104 befestigt. Zwischen den Abdeckungsmitteln 108 und dem Radschützer 104 wird das Kabel 106 eingeklemmt. Auf das Kabel 106 wirkt indirekt eine Kraft durch die elastisch verformbaren Befestigungsmittel 110. Die elastische Rückstellkraft der Befestigungsmittel wirkt über die Abdeckungsmittel 108 auf das Kabel 106.

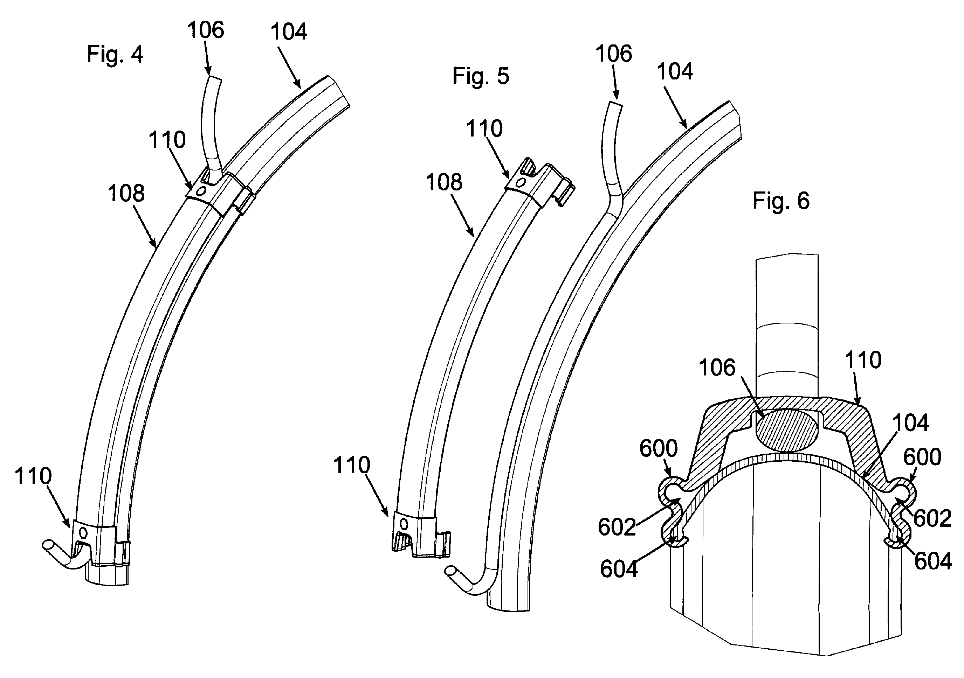

Figur 4 zeigt eine schematische Ansicht eines Radschützer 104 mit einem an dem Radschützer 104 entlang laufenden Kabel 106 und einer Kabelabdeckungsvorrichtung, die Abdeckungsmittel 108 und Befestigungsmittel 110 umfasst. Die Kabelabdeckungsvorrichtung ist mit den Befestigungsmitteln 110 an dem Radschützer 104 befestigt. Das Kabel wird durch die Abdeckungsmittel 108 abgedeckt und eine Klemmkraft wirkt durch die Befestigungsmittel 110 über die Abdeckungsmittel 108 auf das Kabel 106. Diese Kraft klemmt das Kabel 106 zwischen den Abdeckungsmitteln 108 und dem Radschützer 104 ein.

Die abgedeckte Kabelführung entlang des Radschützers 104 ist besonders vorteilhaft, um das Kabel 106 vor Umwelteinflüssen und mechanischen Verformungen zu schützen.

Die Befestigungsmittel 110 können lösbar oder unlösbar mit den Abdeckungsmitteln 108 verbunden sein. Insbesondere kann die Verbindung zwischen den Befestigungsmitteln 110 und den Abdeckungsmitteln 108 eine kraftschlüssige oder stoffschlüssige Verbindung sein. Beispielsweise können die Befestigungsmittel 110 an den Abdeckungsmitteln 108 angeschweißt oder angeklebt sein. Es ist allerdings auch möglich, dass die Befestigungsmittel mittels einer Steckverbindung mit den Abdeckungsmitteln 108 verbunden sind.

Figur 5 zeigt eine schematische Ansicht einer Anordnung, die der aus Figur 4 ähnlich ist. Der Unterschied zu Figur 4 liegt darin, dass die Kabelabdeckungsvorrichtung von dem Radschützer 104 entfernt wurde. In Figur 5 ist besonders gut zu sehen, dass das Kabel 106 von den Abdeckungsmitteln 108 abgedeckt wird und durch sie an den Radschützer 104 angedrückt wird.

Figur 6 ist eine schematische Schnittansicht einer Kabelabdeckungsvorrichtung, die Abdeckungsmittel 108 und Befestigungsmittel 110 umfasst. Aufgrund der Schnittansicht sind die Abdeckungsmittel 108 in Figur 6 durch die Befestigungsmittel 110 verdeckt und nicht ersichtlich.

Besonders gut sind in Figur 6 zwei teilkreisförmige Abschnitte 600 der Befestigungsmittel 110 zu sehen. Die teilkreisförmigen Abschnitte 600 weisen eine Öffnung 602 auf. Bei einer Biegung der Befestigungsmittel 110 verändert sich die Größe der Öffnung 602. Dies dient als Toleranzausgleich für unterschiedliche Radschützer 104 mit unterschiedlichen Abmessungen. Insbesondere unterschiedliche Breiten unterschiedlicher Radschützer können so durch die teilkreisförmigen Abschnitte 600 ausgeglichen werden. Somit eignet sich die Kabelabdeckungsvorrichtung für unterschiedlich ausgebildete Radschützer.

Außerdem ist in Figur 6 besonders gut zu sehen, dass die Befestigungsmittel 110, die Ränder 604 des Radschützers 104 umgreifen. Dies ist vorteilhaft, da so eine besonders große Kraft durch die Befestigungsmittel 110 über die Abdeckungsmittel 108 auf das Kabel 104 ausgeübt werden kann, was dazu führt, dass das Kabel 104 besonders fest gehalten wird und vor mechanischen Verformungen geschützt wird.

## Patentansprüche

1. Kabelabdeckungsvorrichtung für einen Radschützer (104) eines Fahrrads (100) umfassend Abdeckungsmittel (108) zur zumindest teilweisen Abdeckung eines zumindest teilweise entlang des Radschützers geführten Kabels (106) und Befestigungsmittel (110) zur Befestigung der Abdeckungsmittel (108) an dem Radschützer,
**dadurch gekennzeichnet, dass**
die Befestigungsmittel (110) dazu ausgebildet sind, beide Ränder (604) des Radschützers gleichzeitig zu umgreifen.

2. Kabelabdeckungsvorrichtung nach Anspruch 1 , **dadurch gekennzeichnet, dass** die Befestigungsmittel (110) biegbar ausgebildet sind und dazu ausgebildet sind, die Abdeckungsmittel (108) durch eine Klemmverbindung an dem Radschützer (104) zu befestigen.

3. Kabelabdeckungsvorrichtung nach einem der vorhergehenden Ansprüche, **dadurch gekennzeichnet, dass** die Abdeckungsmittel (108) dazu ausgebildet sind, einen zumindest teilweise in zwei Richtungen gekrümmten Teilbereich des Radschützers (104) abzudecken.

4. Kabelabdeckungsvorrichtung nach einem der vorhergehenden Ansprüche, **dadurch gekennzeichnet, dass** die Befestigungsmittel (110) teilkreisförmige Abschnitte (600) mit jeweils einer Öffnung (602) aufweisen, und dass sich die Größe der Öffnungen (602) bei einer Biegung der Befestigungsmittel (110) verändert.

5. Kabelabdeckungsvorrichtung nach einem der vorhergehenden Ansprüche, **dadurch gekennzeichnet, dass** die Befestigungsmittel (110) als Kunststoffspritzgussteile ausgebildet sind.

6. Kabelabdeckungsvorrichtung nach einem der vorhergehenden Ansprüche, **dadurch gekennzeichnet, dass** die Befestigungsmittel (110) dazu ausgebildet sind, die Abdeckungsmittel (108) in einer Richtung komplett zu umschließen.

7. Kabelabdeckungsvorrichtung nach einem der vorhergehenden Ansprüche, **dadurch gekennzeichnet, dass** die Befestigungsmittel (110) einen mittleren Bereich, zwei sich an beiden Seiten des mittleren Bereichs anschließenden Zwischenbereiche und zwei Endbereiche umfassen, wobei die teilkreisförmigen Abschnitte (600) jeweils zwischen einem der Endbereiche und einem der Zwischenbereiche angeordnet sind.

8. Kabelabdeckungsvorrichtung nach einem der vorhergehenden Ansprüche, **dadurch gekennzeichnet, dass** die Abdeckungsmittel (108) zum Abdecken eines Kabels (104) ausgebildet sind, das von einer elektrischen Energiequelle des Fahrrads zu einem elektrischen Antrieb des Fahrrads führt.

9. Radschützer (104) umfassend ein Kabel (106) und eine Kabelabdeckungsvorrichtung nach einem der vorhergehenden Ansprüche, die das Kabel (106) abdeckt.

10. Radschützer (104) nach Anspruch 9, **dadurch gekennzeichnet, dass** das Kabel (106) zwischen dem Radschützer (104) und den Abdeckungsmitteln (108) eingeklemmt ist.

11. Fahrrad (100) mit einem Radschützer nach einem der Ansprüche 9 oder 10.

## Claims

1. Cable cover device for a wheel guard (104) of a bicycle (100), comprising cover means (108) for at least partially covering a cable (106), which is at least partially guided along the wheel guard, and fastening wheels (110) for fastening the cover means (108) to the wheel guard,
**characterized in that**
the fastening means (110) are designed to engage around both edges (604) of the wheel guard at the same time.

2. Cable cover device according to Claim 1, **characterized in that** the fastening means (110) are of bendable design and are designed in order to fasten the cover means (108) to the wheel guard (104) by a clamping connection.

3. Cable cover device according to either of the preceding claims, **characterized in that** the cover means (108) are designed in order to cover a partial region of the wheel guard (104), which partial region is at least partially curved in two directions.

4. Cable cover device according to one of the preceding claims, **characterized in that** the fastening means (110) have partially circular sections (600) with one opening (602) each, and **in that** the size of the openings (602) changes during bending of the fastening means (110).

5. Cable cover device according to one of the preceding claims, **characterized in that** the fastening means (110) are designed as injection-moulded plastics parts.

6. Cable cover device according to one of the preceding claims, **characterized in that** the fastening means (110) are designed in order to completely enclose the cover means (108) in one direction.

7. Cable cover device according to one of the preceding claims, **characterized in that** the fastening means (110) comprise a central region, two intermediate regions adjoining the two sides of the central region, and two end regions, wherein the partially circular sections (600) are in each case arranged between one of the end regions and one of the intermediate regions.

8. Cable cover device according to one of the preceding claims, **characterized in that** the cover means (108) are designed for covering a cable (104) which leads from an electrical energy source of the bicycle to an electric drive of the bicycle.

9. Wheel guard (104) comprising a cable (106) and a cable cover device according to one of the preceding claims, which cable cover device covers the cable (106).

10. Wheel guard (104) according to Claim 9, **characterized in that** the cable (106) is clamped between the wheel guard (104) and the cover means (108).

11. Bicycle (100) with a wheel guard according to either of Claims 9 and 10.

## Revendications

1. Dispositif de recouvrement de câble pour un garde-boue (104) d'une bicyclette (100) comportant des moyens de recouvrement (108) pour le recouvrement au moins partiel d'un câble (106) guidé au moins partiellement le long du garde-boue et des moyens de fixation (110) pour la fixation des moyens de recouvrement (108) au garde-boue,
**caractérisé en ce que**
les moyens de fixation (110) sont réalisés pour venir en prise simultanément autour des deux bords (604) du garde-boue.

2. Dispositif de recouvrement de câble selon la revendication 1, **caractérisé en ce que** les moyens de fixation (110) sont réalisés de manière flexible et sont réalisés pour fixer les moyens de recouvrement (108) au garde-boue (104) au moyen d'une liaison par serrage.

3. Dispositif de recouvrement de câble selon l'une quelconque des revendications précédentes, **caractérisé en ce que** les moyens de recouvrement (108) sont réalisés pour recouvrir une région partielle, courbée au moins partiellement dans deux directions, du garde-boue (104).

4. Dispositif de recouvrement de câble selon l'une quelconque des revendications précédentes, **caractérisé en ce que** les moyens de fixation (110) comprennent des portions partiellement circulaires (600) présentant respectivement une ouverture (602), et **en ce que** la taille des ouvertures (602) change lors d'une flexion des moyens de fixation (110).

5. Dispositif de recouvrement de câble selon l'une quelconque des revendications précédentes, **caractérisé en ce que** les moyens de fixation (110) sont réalisés sous forme de pièces moulées par injection de plastique.

6. Dispositif de recouvrement de câble selon l'une quelconque des revendications précédentes, **caractérisé en ce que** les moyens de fixation (110) sont réalisés pour entourer complètement les moyens de recouvrement (108) dans une direction.

7. Dispositif de recouvrement de câble selon l'une quelconque des revendications précédentes, **caractérisé en ce que** les moyens de fixation (110) comportent une région médiane, deux régions intermédiaires se raccordant aux deux côtés de la région médiane et deux régions d'extrémité, les portions partiellement circulaires (600) étant respectivement disposées entre l'une des régions d'extrémité et l'une des régions intermédiaires.

8. Dispositif de recouvrement de câble selon l'une quelconque des revendications précédentes, **caractérisé en ce que** les moyens de recouvrement (108) sont réalisés pour le recouvrement d'un câble (104) qui mène d'une source d'énergie électrique de la bicyclette à un entraînement électrique de la bicyclette.

9. Garde-boue (104) comportant un câble (106) et un dispositif de recouvrement de câble selon l'une quelconque des revendications précédentes, lequel recouvre le câble (106).

10. Garde-boue (104) selon la revendication 9, **caractérisé en ce que** le câble (106) est serré entre le garde-boue (104) et les moyens de recouvrement (108).

11. Bicyclette (100) comprenant un garde-boue selon l'une quelconque des revendications 9 et 10.
